# EUROPÄISCHE PATENTSCHRIFT

(11) **EP 0 859 034 B1**
(45) Veröffentlichungstag und Bekanntmachung des Hinweises auf die Patenterteilung: **24.04.2002**
(21) Anmeldenummer: 98810072.3
(22) Anmeldetag: 02.02.1998
(51) Int. Cl.: C09B 67/22, C09B 1/34, C09B 69/04

(54) **Farbstoffmischungen und deren Verwendung**
Mixtures of dyes and their use
Mélanges de colorants et leur utilisation

(30) Priorität: 10.02.1997 CH 28597
(43) Veröffentlichungstag der Anmeldung: 19.08.1998
(73) Patentinhaber: Ciba Specialty Chemicals Holding Inc., 4057 Basel (CH)
(72) Erfinder: Lacroix, Roger, 68300 Village-Neuf (FR)

(56) Entgegenhaltungen:
- EP-A- 0 042 357
- EP-A- 0 083 299
- EP-A- 0 083 300
- EP-A- 0 387 201
- EP-A- 0 445 075
- DE-A- 2 341 293
- GB-A- 2 236 542
- US-A- 2 314 356
- US-A- 4 014 646

## Beschreibung

Die vorliegende Erfindung betrifft Mischungen von Farbstoffen sowie deren Verwendung zum Färben oder Bedrucken von stickstoffhaltigen oder hydroxygruppenhaltigen Fasermaterialien.

Die der vorliegenden Erfindung zugrunde liegende Aufgabe war es, Farbstoffmischungen zu finden, welche zum Färben oder Bedrucken von stickstoffhaltigen oder hydroxygruppenhaltigen Fasermaterialien, insbesondere von natürlichen oder synthetischen Polyamidfasermaterialien, geeignet sind, gute Echtheitseigenschaften sowie insbesondere eine gute Löslichkeit und gute Druckpastenstabilität aufweisen.

Aus den EP-A-0 387 201, EP-A-0 083 300 und US-A-2,314,356 sind Mischungen der Anthrachinonfarbstoffe, bzw. Anthrachinonfarbstoffe bekannt, welche in Form der Triethanolammoniumsalze vorliegen und zum Färben natürlicher oder synthetischen Polyamidmaterialien geeignet sind.

Es wurde nun gefunden, dass die nachstehenden Farbstoffmischungen diesen Anforderungen weitgehend genügen.

Gegenstand der vorliegenden Erfindung sind Farbstoffmischungen, welche dadurch gekennzeichnet sind, dass sie einen Farbstoff der Formel 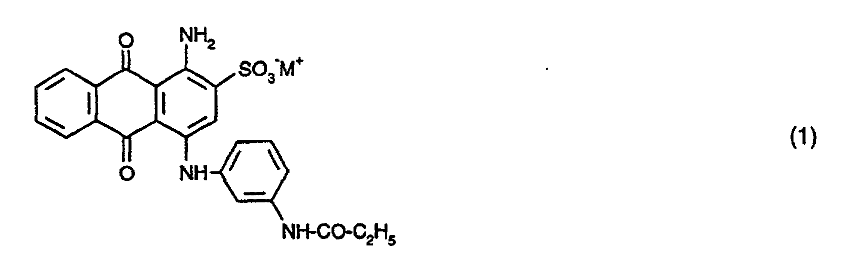 zusammen mit einem Farbstoff der Formel 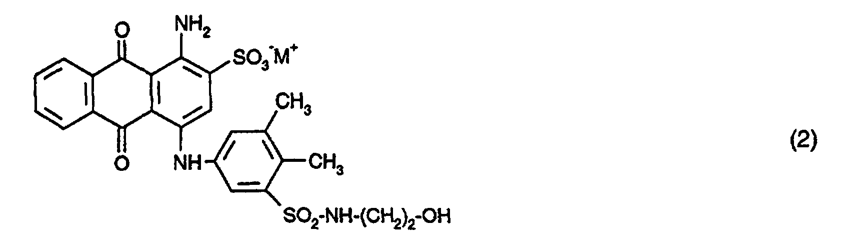 enthalten, worin M⁺ in den Farbstoffen der Formeln (1) und (2) Ammoniumkationen 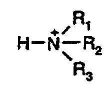 eines Amins der Formel 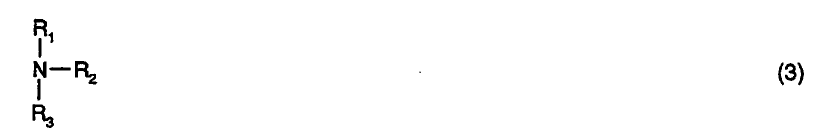 sind, wobei
R₁, R₂ und R₃ durch Hydroxy substituiertes Propyl sind.

Bevorzugt ist R₁ ein Rest der Formel -CH₂-CH(OH)-CH₃.

Bevorzugt ist R₂ ein Rest der Formel -CH₂-CH(OH)-CH₃.

Bevorzugt ist R₃ ein Rest der Formel -CH₂-CH(OH)-CH₃.

Besonders bevorzugt sind R₁, R₂ und R₃ Reste der Formel -CH₂-CH(OH)-CH₃.

Von besonderem Interesse sind Farbstoffmischungen, welche, bezogen auf die Gesamtmenge der Farbstoffe der Formeln (1) und (2), mindestens 5 Gewichtsprozent, vorzugsweise mindestens 10 Gewichtsprozent und insbesondere mindestens 15 Gewichtsprozent, eines Farbstoffes der Formel (2) enthalten.

Gegenstand der vorliegenden Erfindung sind ferner Farbstoffe der Formel (1) sowie Farbstoffe der Formel (2), wobei für R₁, R₂ und R₃ die oben angegebenen Bedeutungen und Bevorzugungen gelten.

Farbstoffe der Formeln (1) und (2) können z.B. erhalten werden, indem man 1-Amino-4-brom-anthrachinon-2-sulfonsäure mit 3-Propionamido-anilin bzw. 5-Amino-1,2-xylol-3-sulfo-2'-hydroxyethylamid umsetzt, und anschliessend mit einem Amin der Formel (3) umsetzt. Die erste Umsetzung erfolgt vorzugsweise in wässriger Lösung bei einer Temperatur von z.B. 50 bis 100°C, insbesondere 65 bis 85°C, in Gegenwart einer Base wie z.B. Natriumhydrogencarbonat, und einem Katalysator, wie beispielsweise einer Mischung aus Kupfer und Kupferchlorid. Die Umsetzung mit einem Amin der Formel (3) erfolgt z.B. durch Neutralisation einer wässrigen Farbstofflösung mit dem entsprechenden Amin.

Mischungen der Farbstoffe der Formeln (1) und (2) können z.B. durch Mischsynthese erhalten werden, wobei man 1-Amino-4-brom-anthrachinon-2-sulfonsäure mit einer entsprechenden Mischung von 3-Propionamido-anilin und 5-Amino-1,2-xylol-3-sulfo-2'-hydroxyethylamid umsetzt. Die Umsetzung mit einem Amin der Formel (3) kann wie oben angegeben ausgeführt werden.

Die erfindungsgemässen Farbstoffmischungen können weiterhin auch durch Mischung der Einzelfarbstoffe hergestellt werden. Dieser Mischprozess erfolgt beispielsweise in geeigneten Mühlen, z.B. Kugel- und Stiftmühlen, sowie in Knetem oder Mixern. Ferner können die Farbstoffmischungen z.B. durch Zerstäubungstrocknung der wässrigen Farbstoffmischungen hergestellt werden.

Gegenstand der vorliegenden Erfindung sind ferner konzentrierte wässrige Lösungen von Farbstoffen, dadurch gekennzeichnet, dass sie 5 bis 50 Gew.-%, insbesondere 10 bis 50 Gew.-% und vorzugsweise 20 bis 50 Gew.-%, bezogen auf das Gesamtgewicht der Lösung, eines Farbstoffes der Formel (1) oder (2), oder insbesondere einer Farbstoffmischung der Farbstoffe der Formeln (1) und (2) enthalten.

Die erfindungsgemässen konzentrierten wässrigen Lösungen können weitere Zusätze, wie z.B. Harnstoff, Caprolactam oder Polyethylenglykol, enthalten. Ferner können die erfindungsgemässen konzentrierten wässrigen Lösungen noch Pilz- und/oder Bakterienwachstum hemmende Stoffe enthalten.

Die erfindungsgemässen Farbstofflösungen weisen ferner eine gute Hartwasserbeständigkeit auf und sie lassen sich mit Wasser in beliebigem Verhältnis verdünnen, etwa bei der Herstellung der Färbeflotte, ohne das die gelösten Farbstoffe ausfallen.

Die erfindungsgemässen Farbstoffmischungen und Farbstoffe können in den üblichen Färbe- bzw. Druckverfahren angewendet werden. Die Färbeflotten oder Druckpasten können ausser Wasser und den Farbstoffen weitere Zusätze, beispielsweise Netzmittel, Antischaummittel, Egalisiermittel oder die Eigenschaft des Textilmaterials beeinflussende Mittel wie z.B. Weichmachungsmittel, Zusätze zum Flammfestausrüsten oder schmutz-, wasserund öl-abweisende Mittel sowie wasserenthärtende Mittel und natürliche oder synthetische Verdicker, wie z.B. Alginate und Celluloseäther, enthalten.

Die erfindungsgemässen Farbstoffmischungen und Farbstoffe sind auch zum Färben aus Kurzflotten, wie z.B. bei Kontinuefärbeverfahren oder diskontinuierlichen und kontinuierlichen Schaumfärbeverfahren, geeignet.

Die erfindungsgemässen Farbstoffmischungen und Farbstoffe zeichnen sich insbesondere durch gutes Aufziehverhalten, gute Löslichkeit und Druckpastenstabilität sowie durch gute Kombinierbarkeit aus. Weiterhin weisen die erfindungsgemässen Farbstoffmischungen und Farbstoffe eine gute Lagerstabilität auf, wobei z.B. deren konzentrierte Lösungen bei einer Temperatur von -5 bis +40°C mehrere Monate lagestabil sind.

Es werden egale Färbungen mit guten Allgemeinechtheiten, insbesondere guter Reib-, Nass-, Nassreib- und Lichtechtheit erhalten.

Die erfindungsgemässen Farbstoffmischungen und Farbstoffe eignen sich zum Färben oder Bedrucken von hydroxylgruppenhaltigem oder stickstoffhaltigem Fasermaterial. Besondere Eignung finden sie zum Färben oder Bedrucken von natürlichen Polyamidmaterialien, wie z.B. Wolle, oder insbesondere von synthetischen Polyamidmaterialien, wie z.B. Polyamid 6 oder Polyamid 6.6, oder von Seide und sind auch geeignet zum Färben oder Bedrucken von Mischgeweben oder -Garnen aus Wolle und synthetischem Polyamid.

Das genannte Material, insbesondere Textilmaterial, kann dabei in den verschiedensten Verarbeitungsformen vorliegen, wie z.B. als Faser, Garn, Gewebe oder Gewirke und insbesondere in Form von Teppichen.

In den folgenden Beispielen stehen Teile für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

Beispiel 1: In einem Sulfierkolben werden 880 Teile Wasser vorgelegt und es werden 382 Teile 1-Amino-4-brom-anthrachinon-2-sulfonsäure, 138 Teile 3-Propionamido-anilin und 51,2 Teile 5-Amino-1,2-xylol-3-sulfo-2'-hydroxyethylamid eingetragen. Nach Zugabe von 201 Teilen Natriumhydrogencarbonat wird auf eine Temperatur von 75°C erwärmt. Unter ständigem Rühren werden dann 1 Teil Kupfer und 1 Teil Kupferchlorid zugegeben. Nach ca. 6 Stunden ist die Reaktion beendet. Man gibt 2180 Teile Wasser sowie 125 Teile Natriumsulfat zu, wobei die Temperatur auf 50°C sinkt. Der pH wird mit 75 Teilen Schwefelsäure (60%-ig) auf einen Wert von 5 bis 6 gestellt und es werden 188 Teile Natriumsulfat zugegeben. Das erhaltene Produkt wird über eine Nutsche abgesaugt und mit einer warmen Lösung von 245 Teilen Natriumchlorid in 4780 Teilen Wasser nachgewaschen. Man erhält 860 Teile eines noch feuchten Produktes, welches die Farbstoffe der Formeln 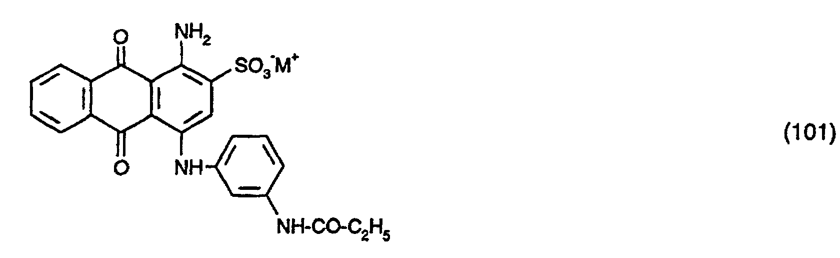 und 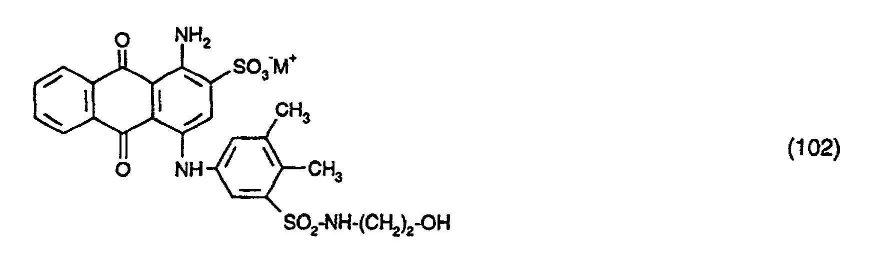 als Natriumsalze in einem Gewichtsverhältnis von 80:20 enthält.

100 Teile des so erhaltenen Produktes, welches 64 Gew.-% Farbstoff und 36 Gew.-% Wasser enthält, werden in 600 Teilen Wasser angeschlämmt und unter starkem Rühren auf eine Temperatur von 80 bis 90°C erwärmt. Anschliessend werden 35 Teile Salzsäure (32%-ig) zugetropft und es wird 30 Minuten bei einer Temperatur von 85°C nachgerührt. Die Suspension wird dann heiss abgenutscht, mit 100 Teilen Salzsäure (4%-ig) nachgewaschen und gut abgepresst. Man erhält ca. 115 Teile eines feuchten Produktes, die in 70 Teilen entmineralisiertem Wasser angeschlämmt werden. Diese Paste wird dann mit 40 Teilen wässrigem Triisopropanolamin (66%-ig) bei einem pH-Wert von 7 bis 7,2 neutralisiert. Anschliessend werden 0,7 Teile eines handelsüblichen Bakterizids zugesetzt und die Farbstofflösung wird klärfiltriert. Die Zusammensetzung dieser flüssigen Formulierung ist wie folgt:

37,7 Gew.-% einer Mischung der Farbstoffe der Formeln (1) und (2) als Salze des Triisopropanolamins, wobei das Gewichtsverhältnis der Farbstoffe wie oben angegeben ist,
0,3 Teile eines handelsüblichen Bakterizids und
62 Gew.-% Wasser.

Die erhaltene Formulierung ist bei einer Temperatur von -5 bis +40°C lagerstabil und färbt Polyamidgewebe in blauen Farbtönen.

Beispiel 2: In einem Sulfierkolben werden 880 Teile Wasser vorgelegt und es werden 382 Teile 1-Amino-4-brom-anthrachinon-2-sulfonsäure, 138 Teile 3-Propionamido-anilin und 51,2 Teile 5-Amino-1,2-xylol-3-sulfo-2'-hydroxyethylamid eingetragen. Nach Zugabe von 201 Teilen Natriumhydrogencarbonat wird auf eine Temperatur von 75°C erwärmt. Unter ständigem Rühren werden dann 1 Teil Kupfer und 1 Teil Kupferchlorid zugegeben. Nach ca. 6 Stunden ist die Reaktion beendet. Man gibt 2180 Teile Wasser sowie 345 Teile 32%ige HCI zu. Man rührt noch 30 Minuten bei 80°C und das erhaltene Produkt wird über eine Nutsche abgesaugt und mit einer warmen Lösung von 25 Teilen HCI in 800 Teilen Wasser nachgewaschen. Man erhält 840 Teile eines noch feuchten Produktes, welches die Farbstoffe der Formeln (101) und (102) als freie Säuren (M = H) in einem Gewichtsverhältnis von 80:20 enthält. 100 Teile des feuchten Produkts werden in 70 Teilen entmineralisiertem Wasser angeschlämmt. Diese Paste wird dann mit 40 Teilen wässrigem Triisopropanolamin (66%-ig) bei einem pH-Wert von 7 bis 7,2 neutralisiert. Anschliessend werden 0,7 Teile eines handelsüblichen Bakterizids zugesetzt und die Farbstofflösung wird klärfiltriert. Die Zusammensetzung dieser flüssigen Formulierung ist wie folgt:

37,7 Gew.-% einer Mischung der Farbstoffe der Formeln (1) und (2) als Salze des Triisopropanolamins, wobei das Gewichtsverhältnis der Farbstoffe wie oben angegeben ist,
0,3 Teile eines handelsüblichen Bakterizids und
62 Gew.-% Wasser.

Die erhaltene Formulierung ist bei einer Temperatur von -5 bis +40°C lagerstabil und färbt Polyamidgewebe in blauen Farbtönen.

### Färbevorschrift I

Man färbt 10 Teile Polyamid-6,6-Gewebe in 500 Teilen einer wässrigen Flotte, die 2 g/l Ammonacetat enthält und mit Essigsäure auf pH 5 gestellt wird. Der Anteil der flüssigen Formulierung gemäss Beispiel 1 beträgt 2 %, bezogen auf das Fasergewicht. Die Färbedauer bei einer Temperatur von 98°C beträgt 30 bis 90 Minuten. Das gefärbte Polyamid-6,6-Gewebe wird anschliessend herausgenommen und wie üblich gewaschen und getrocknet.

### Färbevorschrift II

Man färbt 10 Teile Polyamid-6,6-Gewebe in 500 Teilen einer wässrigen Flotte, die 1 g/l Mononatriumphosphat enthält und mit Dinatriumphosphat auf pH 6 gestellt wird. Der Anteil der flüssigen Formulierung gemäss Beispiel 1 beträgt 2 %, bezogen auf das Fasergewicht. Die Färbedauer bei einer Temperatur von 98°C beträgt 30 bis 90 Minuten. Das gefärbte Polyamid-6,6-Gewebe wird anschliessend herausgenommen und wie üblich gewaschen und getrocknet.

### Färbevorschrift III

Man färbt 10 Teile Wollstück in 500 Teilen einer wässrigen Flotte. Bezogen auf das Fasergewicht enthält die Flotte 2 % der flüssigen Formulierung gemäss Beispiel 1, 5 % Glaubersalz kalz. und 2 % 80%-iger Essigsäure. Die Färbedauer bei einer Temperatur von 98°C beträgt 30-60 Minuten.

## Patentansprüche

1. Farbstoffmischungen, **dadurch gekennzeichnet, dass** sie einen Farbstoff der Formel 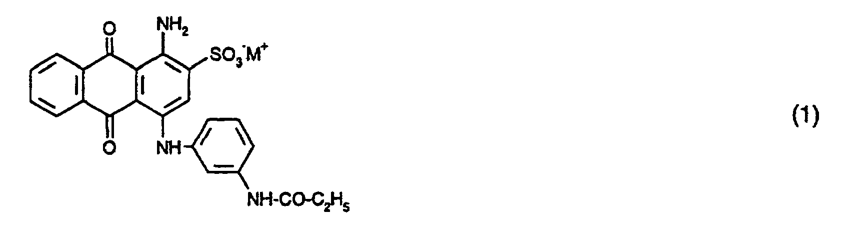 zusammen mit einem Farbstoff der Formel 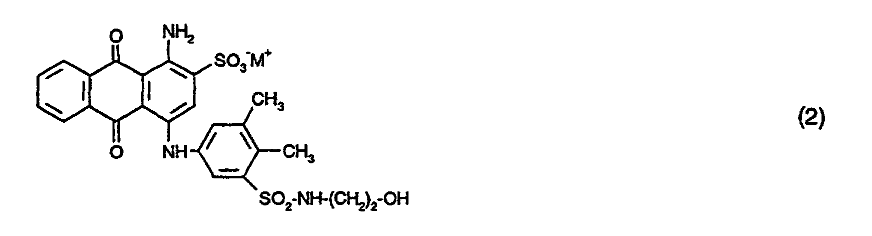 enthalten, worin M⁺ in den Farbstoffen der Formeln (1) und (2) Ammoniumkationen 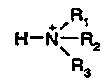 eines Amins der Formel 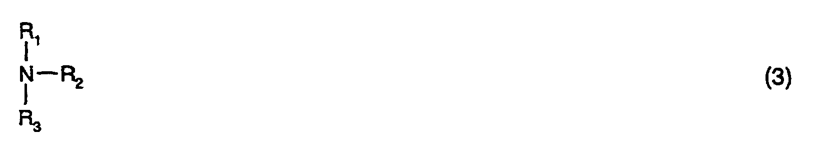 sind, wobei
R₁, R₂ und R₃ durch Hydroxy substituiertes Propyl sind.

2. Farbstoffmischungen gemäss Anspruch 1, **dadurch gekennzeichnet, dass** R₁, R₂ und R₃ Reste der Formel -CH₂-CH(OH)-CH₃ sind.

3. Farbstoffe der Formel 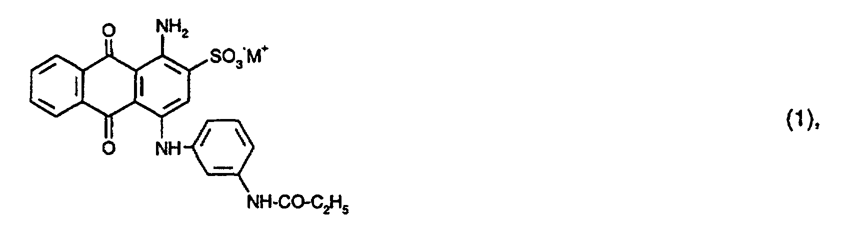 worin M⁺ ein Ammoniumkation 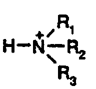 eines Amins der Formel 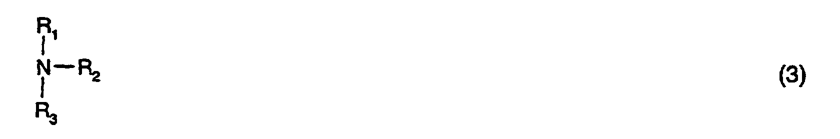 ist, wobei
R₁, R₂ und R₃ durch Hydroxy substituiertes Propyl sind.

4. Farbstoffe der Formel 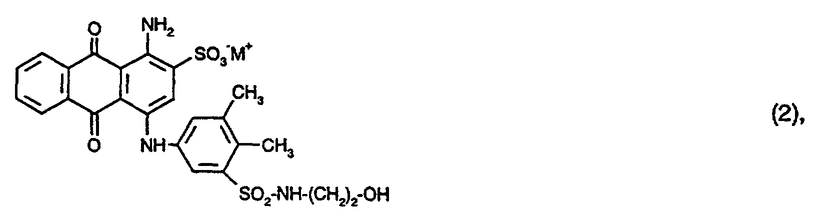 worin M⁺ ein Ammoniumkation 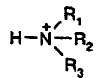 eines Amins der Formel 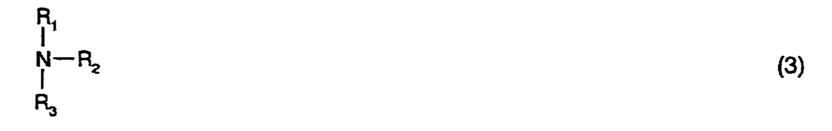 ist, wobei
R₁, R₂ und R₃ durch Hydroxy substituiertes Propyl sind.

5. Konzentrierte wässrige Lösungen von Farbstoffen, **dadurch gekennzeichnet, dass** sie 5 bis 50 Gew.-%, bezogen auf das Gesamtgewicht der Lösung, einer Farbstoffmischung gemäss Anspruch 1 enthalten.

6. Verwendung der Farbstoffmischungen gemäss einem der Ansprüche 1 und 2 zum Färben oder Bedrucken von hydroxylgruppenhaltigem oder stickstoffhaltigem Fasermaterial.

7. Verwendung gemäss Anspruch 6 zum Färben oder Bedrucken von natürlichem oder synthetischem Polyamidfasermaterial, insbesondere synthetischem Polyamidfasermaterial.

## Claims

1. A dye mixture which contains a dye of the formula 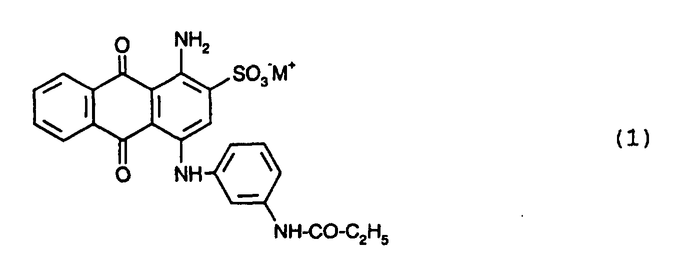 together with a dye of the formula 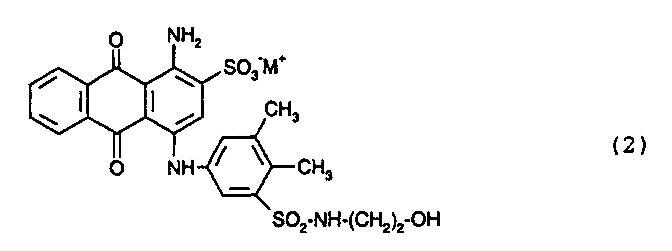 in which M⁺ in the dyes of the formulae (1) and (2) are ammonium cations 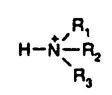 of an amine of the formula 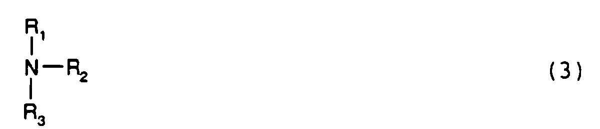 where
R₁, R₂ and R₃ are propyl which is substituted by hydroxyl.

2. A dye mixture according to claim 1, wherein R₁, R₂ and R₃ are radicals of the formula -CH₂-CH(OH)-CH₃.

3. A dye of the formula 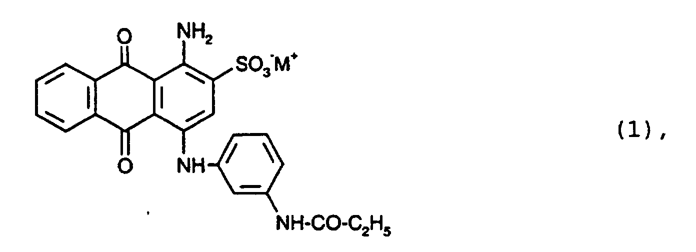 in which M⁺ is an ammonium cation 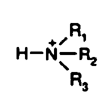 of an amine of the formula 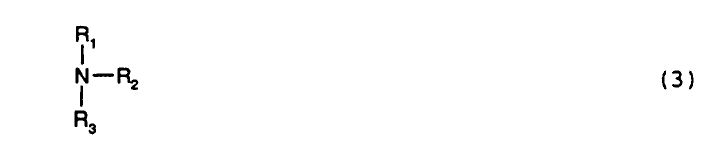 where
R₁, R₂ and R₃ are propyl which is substituted by hydroxyl.

4. A dye of the formula 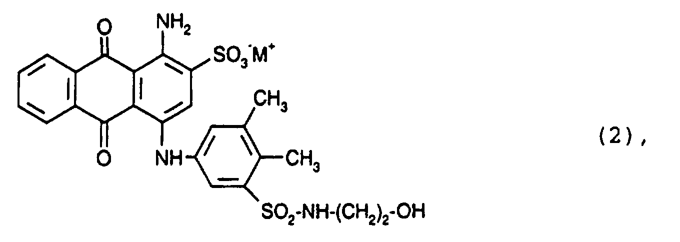 in which M⁺ is an ammonium cation 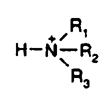 of an amine of the formula 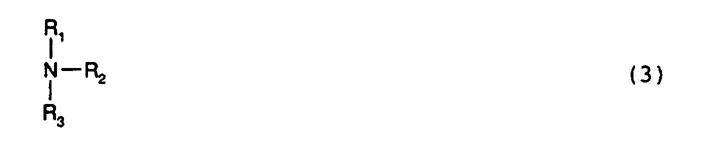 where
R₁, R₂ and R₃ are propyl which is substituted by hydroxyl.

5. A concentrated aqueous solution of dyes, which contains 5 to 50% by weight, based on the total weight of the solution, of a dye mixture according to claim 1.

6. The use of the dye mixtures according to either claim 1 or claim 2 for dyeing or printing hydroxyl group-containing or nitrogen-containing fibre material.

7. The use according to claim 6 for dyeing or printing natural or synthetic polyamide fibre material, in particular synthetic polyamide fibre material.

## Revendications

1. Mélanges de colorants, **caractérisés en ce qu'**ils contiennent un colorant de formule 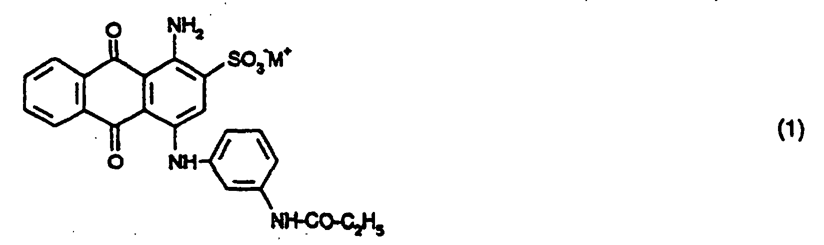 en même temps qu'un colorant de formule 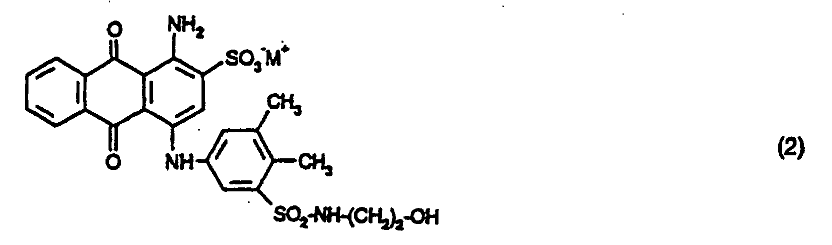 dans lesquelles les M⁺ dans les colorants des formules (1) et (2) sont des cations ammonium 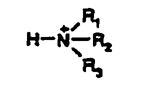 d'une amine de formule 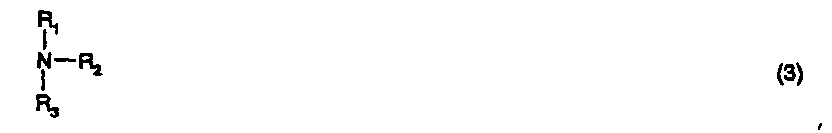 dans laquelle
R₁, R₂ et R₃ sont un propyle substitué par un hydroxy.

2. Mélanges de colorants selon la revendication 1, **caractérisés en ce que** R₁, R₂ et R₃ sont des groupes de formule -CH₂-CH(OH)-CH₃.

3. Colorants de formule 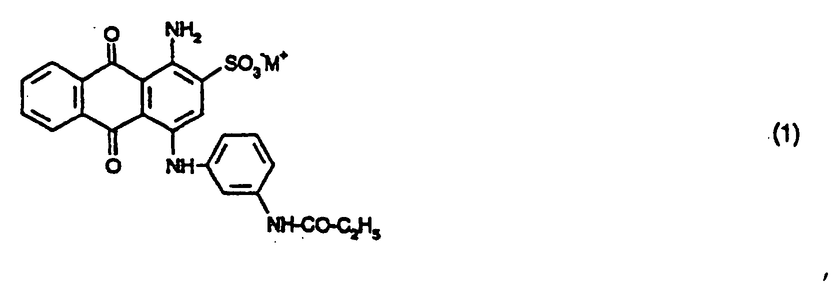 dans laquelle
M⁺ est un cation ammonium 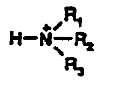 d'une amine de formule 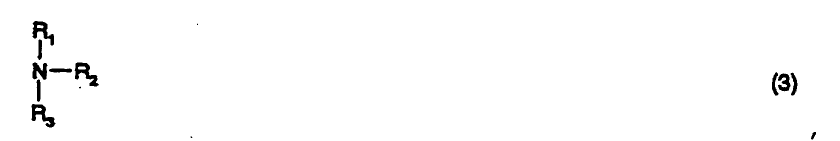 dans laquelle
R₁, R₂ et R₃ sont un propyle substitué par un hydroxy.

4. Colorants de formule 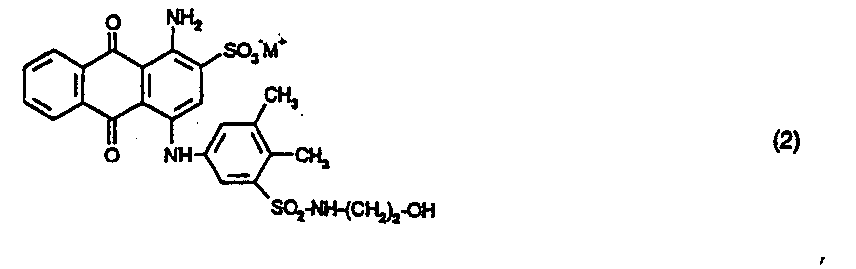 dans laquelle M⁺ est un cation ammonium 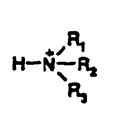 d'une amine de formule 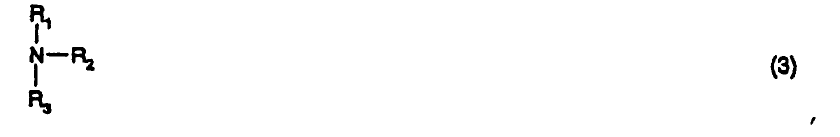 dans laquelle
R₁, R₂ et R₃ sont un propyle substitué par un hydroxy.

5. Solutions aqueuses concentrées de colorants, **caractérisées en ce qu'**elles contiennent de 5 à 50 % en poids, par rapport au poids total de la solution, d'un mélange de colorants selon la revendication 1.

6. Utilisation des mélanges de colorants selon l'une des revendications 1 et 2 pour la teinture ou l'impression de matériau fibreux contenant des groupes hydroxyle ou contenant de l'azote.

7. Utilisation selon la revendication 6 pour la teinture ou l'impression de matériau en fibres de polyamide naturel ou synthétique, en particulier de matériau en fibres de polyamide synthétique.
